# EUROPÄISCHE PATENTSCHRIFT

(11) **EP 0 314 989 B1**
(45) Veröffentlichungstag und Bekanntmachung des Hinweises auf die Patenterteilung: **11.08.1993**
(21) Anmeldenummer: 88117469.2
(22) Anmeldetag: 20.10.1988
(51) Int. Cl.: G01J 5/08

(54) **Pyrometrisches Temperaturmessgerät**
Pyrometric temperature-measuring device
Dispositif pour la mesure pyrométrique de températures

(30) Priorität: 03.11.1987 CH 4297/87
(43) Veröffentlichungstag der Anmeldung: 10.05.1989
(73) Patentinhaber: BBC Brown Boveri AG, CH-5401 Baden (CH)
(72) Erfinder: Kaufmann, Meinolph, CH-5405 Baden (CH); Schultheis, Lothar, Dr., CH-5442 Fislisbach (CH)

(56) Entgegenhaltungen:
- GB-A- 2 045 921
- US-A- 4 576 486
- US-A- 4 679 934
- REVIEW OF SCIENTIFIC INSTRUMENTS,Band 50, Nr. 5, Mai 1979, Seiten 662-663, American Institute of Physics; D.E. HOLMES: "Fiber optic probe for thermal profiling of liquids during crystal growth"
- PATENT ABSTRACTS OF JAPAN, Band 9, Nr. 129 (P-361)[1852], 5. Juni 1985; JP-A-60 13 231 (MATSUSHITA DENKI SANGYO K.K.) 23-01-1985
- ADVANCES IN INSTRUMENTATION, Band 33, Teil 1, 1978, Seiten 385-402, ISA 1978; R. VANZETTI et al.: "Fiber optics the latest word in temperature measurement"

## Beschreibung

### Technisches Gebiet

Die Erfindung betrifft ein pyrometrisches Niedertemperaturmessgerät mit
a) mindestens einem Lichtwellenleiter mit einem Kern und einem Mantel,
b) einem Lichtdetektor mit mindestens einer Photodiode und
c) mindestens einem pyrometrischen Sensor, der am Ende des mindestens einen Lichtwellenleiters angebracht ist und durch eine mindestens einen Querschnitt des Lichtwellenleiters bedeckende schwarze Schicht gebildet wird.

### STAND DER TECHNIK

Um Temperaturen in Gegenwart von elektrischen und magnetischen Feldern (z.B. in Maschinen oder Transformatoren) störungsfrei messen zu können, werden bevorzugt faseroptische Sensoren eingesetzt. Mit Hilfe einer temperaturabhängigen physikalischen Grösse wird dabei auf Intensität, Phase oder Polarisation des in einem Lichtwellenleiter geführten Lichtes Einfluss genommen und aus den dadurch herbeigeführten Veränderungen eine Temperatur abgeleitet. Der Lichtwellenleiter kann dabei selbst als Sensor dienen (z.B. bei der Streckung einer Faser aufgrund einer Temperaturausdehnung eines Körpers oder nur als Uebertragungselement dienen. Ueblicherweise ist es so, dass Licht einer Lichtquelle in den Lichtwellenleiter eingekoppelt wird, von diesem an den Ort der zu messenden Temperatur hingeführt und dann zu einem Lichtdetektor zurückgeführt wird, wo aus einer veränderten Lichtintensität, Polarisation oder Phase die Temperatur abgeleitet wird.

Als Alternative zu den genannten Messprinzipien kann die pyrometrische Temperaturmessung betrachtet werden. Sie beruht auf der temperaturabhängigen Wärmestrahlung, die ein schwarzer Körper aussendet, und kommt deshalb ohne Lichtquelle aus. Dieses Prinzip wird vor allem zum Messen von hohen Temperaturen, d.h. 600 °C und mehr, benützt. Die DE-C2 30 50 539 z.B. offenbart eine Anordnung zur pyrometrischen Temperaturmessung einer Schmelze. Der Lichtwellenleiter dient dabei als reines Uebertragungselement.

Es ist auch schon vorgeschlagen worden, den Lichtwellenleiter selbst als pyrometrischen Sensor zu verwenden. In diesem Zusammenhang wird auf die Veröffentlichung EP-A2 0 049 866 hingewiesen. Der Lichtwellenleiter besitzt einen Kern, welcher in seiner ganzen Länge geeignet dotiert ist. Die Dotierung wirkt als Strahlungsquelle, welche die zu messende Wärmestrahlung erzeugt. Während ein entsprechendes Temperaturmessgerät für Temperaturen grösser als 300 °C problemlos funktioniert, ergeben sich Schwierigkeiten für niedrige Temperaturen. Einerseits soll der Kern genügend Wärmestrahlung erzeugen, so dass deren Intensität überhaupt mit einer Photodiode gemessen werden kann, andererseits dämpft die Dotierung des Kerns die zu leitende Wärmestrahlung zu stark, wenn das Absorptionsvermögen des Kerns zu gross ist. Als Folge davon müssen Dotierung und Länge des Lichtwellenleiters genau aufeinander abgestimmt sein. Selbstverständlich kann mit dem vorgeschlagenen Temperaturmessgerät nur die grösste Temperatur gemessen werden, die an irgendeiner Stelle des Lichtwellenleiters herrscht.

Für die Messung von relativ hohen Temperaturen wird in der GB-A-2 045 921 beispielsweise ein Temperaturmessgerät vorgeschlagen, welches einen Detektor, mindestens eine optische Faser und einen Sensor umfasst, wobei der Sensor am Ende der optische Faser angebracht ist und die emittierte Wärmestrahlung durch die Faser vom Sensor zum Detektor geleitet wird. Als Faser wird dabei eine 'pure silica' Faser verwendet. Der Sensor besteht aus der optischen Faser, an deren Ende eine undurchsichtige Kappe aufgesetzt ist, welche aus Metall oder Bor-Nitrid besteht. Die Empfindlichkeit diese Messgeräts ist wegen der Beschaffenheit der Faser und der Ausführung des Sensors nicht allzu hoch, so dass nur in einem Bereich von 400°C bis 1000°C gemessen werden kann.

Ein ähnliches Messgerät schlägt D.E. Holmes im Artikel "Fiber optic probe for thermal profiling od liquids during crystal growth", 8127 Review of Scientific instr., Vol. 50 No. 5 (1979-05) vor. Der Sensor besteht aus einem Wulst aus Graphit. Der Kern der Faser weist einen Durchmesser von 80µm auf. Mit dieser Anordnung können Temperaturen von ca. 800°C gemessen werden.

In der JP-A-60 13 231 wird eine weiteres pyrometrisches Temperaturmessgerät offenbart, bei dem durch die Wahl von speziellen und dementsprechend teuren Fasermaterialien eine weit höhere Empfindlichkeit erreicht wird. Mit diesem Messgerät können Temperaturen unter 200°C gemessen werden.

### DARSTELLUNG DER ERFINDUNG

Aufgabe der Erfindung ist es, ein pyrometrisches Niedertemperaturmessgerät der eingangs genannten Art zu schaffen, welches Temperaturen unter 200°C zu detektieren vermag, wobei handelsübliche Fasern zum Einsatz gelangen sollen.

Erfindungsgemäss besteht die Lösung darin, dass
a) der mindestens eine Lichtwellenleiter eine grosse numerische Apertur von mehr als etwa 0.3 besitzt,
b) der mindestens eine Lichtwellenleiter einen Kern mit einem Durchmesser von mehr als etwa 100µm aufweist, und
c) als Lichtwellenleiter eine PCS (plastic-clad-silica) Faser mit lichtundurchlässiger Hülle verwendet wird.

Der Vorteil des erfindungsgemässen Niedertemperaturmessgeräts besteht darin, dass mit handelsüblichen PCS-Fasern relativ niedrige Temperaturen gemessen werden können. Die Empfindlichkeit ist wegen der erfindungsgemässen grossen numerische Apertur der Faser so gross, dass problemlos Temperaturen unter 200°C detektiert werden können.

Weitere bevorzugte Ausführungsformen ergeben sich aus den Unteransprüchen.

### KURZE BESCHREIBUNG DER ZEICHNUNG

Nachfolgend soll die Erfindung anhand von Ausführungsbeispielen im Zusammenhang mit der Zeichnung näher erläutert werden.
Es zeigen:
- Fig. 1: ein pyrometrisches Temperaturmessgerät mit einem einzigen pyrometrischen Sensor,
- Fig. 2: einen Axialschnitt durch einen pyrometrischen Sensor,
- Fig. 3: ein Blockschaltbild eines Lichtdetektors,
- Fig. 4: ein Blockschaltbild eines Lichtdetektors mit interner Referenzbildung,
- Fig. 5: einen Axialschnitt durch einen in einer Glasfaser integrierten pyrometrischen Sensor,
- Fig. 6: ein pyrometrisches Temperaturmessgerät mit mehreren pyrometrischen Sensoren,
- Fig. 7: einen Axialschnitt durch einen in einer Glasfaser integrierten pyrometrischen Sensor, und
- Fig. 8: eine Darstellung einer Ausgangsspannung eines Verstärkers in Abhängigkeit von der Temperatur eines pyrometrischen Sensors.

### WEGE ZUR AUSFÜHRUNG DER ERFINDUNG

In einem ersten Ausführungsbeispiel wird ein pyrometrisches Temperaturmessgerät mit einem einzigen pyrometrischen Sensor beschrieben.

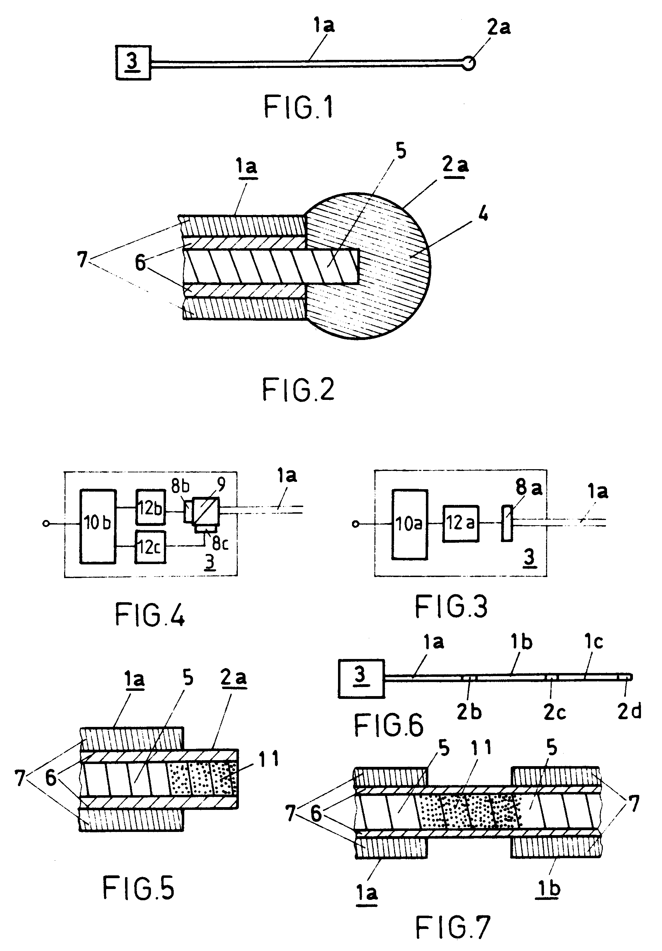

Fig. 1 zeigt ein pyrometrisches Temperaturmessgerät mit einem Lichtwellenleiter 1a, einem pyrometrischen Sensor 2a und einem Lichtdetektor 3. Der pyrometrische Sensor 2a steht mit einem Messobjekt in thermischem Kontakt. Er absorbiert Wärmestrahlung, welche in einer Umgebung des Messobjekts vorhanden ist. Als Folge davon sendet er selbst eine Wärmestrahlung aus, deren Intensität und spektrale Verteilung durch die bekannte Planck'sche Strahlungsformel gegeben ist. Die Wärmestrahlung wird in den Lichtwellenleiter 1a eingekoppelt und von diesem zum Lichtdetektor 3 geführt. Im Lichtdetektor 3 wird die Intensität der Wärmestrahlung in einem gegebenen Wellenlängenbereich gemessen und daraus eine Temperatur abgeleitet.

Fig. 2 zeigt einen Schnitt durch einen pyrometrischen Sensor 2a. Als Lichtwellenleiter 1a dient in diesem Ausführungsbeispiel eine Glasfaser. Ein Kern 5, welcher von einem Mantel 6 umgeben ist, überträgt die Wärmestrahlung. Gemäss einer bevorzugten Ausführungsform ist die Glasfaser zusätzlich durch eine den Mantel 6 umgebende, lichtundurchlässige Hülle 7 gegen unerwünschte Streulichteinflüsse abgeschirmt.

An einem Ende der Glasfaser ist der Mantel 6 vom Kern 5 entfernt worden, so dass ein Ende des Kerns 5 etwas aus der Glasfaser herausragt. Der pyrometrische Sensor 2a ist gemäss einer bevorzugten Ausführungsform eine das Ende der Glasfaser bedeckende schwarze Schicht 4. Für diese schwarze Schicht 4 ist jedes Material geeignet, welches eine hohe thermische Emissivität hat, d.h. nach dem bekannten Kirchhoff'schen Gesetz, welches in einem interessierenden, gegebenen Wellenlängenbereich ein hohes und möglichst temperaturunabhängiges Absorptionsvermögen hat. In diesem Sinn hat sich eine Mischung aus feinverteiltem Kohlenstoff und einem Silikon-Kleber als besonders gut geeignet erwiesen. Sie kann in der Form einer schwarzen Paste ganz einfach auf das Ende der Glasfaser aufgebracht werden.

Die Tatsache, dass der Kern 5 mit seinem Ende aus der Glasfaser herausragt, ist von untergeordneter Bedeutung. Wichtig ist dagegen, dass der Lichtwellenleiter 1a und damit die Glasfaser, eine grosse numerische Apertur, bevorzugterweise von mehr als etwa 0.3, besitzt. Auf diese Weise kann ein möglichst grosser Teil der auf das Ende des Kerns 5 auftreffenden Wärmestrahlung in den Lichtwellenleiter 1a eingekoppelt werden. Aus diesem Grund wird auch zumindest ein Querschnitt des Kerns 5 mit dem pyrometrischen Sensor 2a, d.h. mit der schwarzen Schicht 4 vollständig bedeckt. Je grösser ein Durchmesser des Kerns ist, desto grösser ist auch die gesamte Intensität der eingekoppelten Wärmestrahlung. Er ist bevorzugterweise grösser als 100 µm. Eine obere Grenze für den Durchmesser ist gegeben durch nachteilige mechanische Eigenschaften (z.B. geringe Bruchfestigkeit) der Glasfaser. Bei handelsüblichen Glasfasern liegt deshalb die obere Grenze für den Durchmesser des Kerns 5 bei etwa 1000 µm.

Alle die genannten Massnahmen dienen dazu, einen möglichst grossen Teil der bei den gewünschten Temperaturen von weniger als 200 °C an sich schwachen Wärmestrahlung dem Lichtdetektor 3 zuführen zu können, um so möglichst tiefe Temperaturen messen zu können.

Fig. 3 zeigt ein Blockschaltbild eines Lichtdetektors 3. Er umfasst eine Photodiode 8a, einen Verstärker 12a und eine Auswerteschaltung 10a. Die Photodiode 8a ist an einem Ende des Lichtwellenleiters 1a angeordnet. Sie erzeugt ein Photostrom in Abhängigkeit von der Intensität der eintreffenden Wärmestrahlung. Der Verstärker 12a verstärkt den Photostrom der Photodiode und liefert eine Ausgangsspannung, welcher in der nachfolgenden Auswerteschaltung 10a eine Temperatur zugeordnet wird.

Die Photodiode 8a soll sowohl eine hohe Empfindlichkeit (vorzugsweise in einem mittleren Infrarotbereich) als auch ein geringes Rauschen aufweisen. Diese Anforderungen lassen sich, wie bereits gesagt, am besten mit einer InGaAs-Photodiode erfüllen. Als Verstärker 12a kann ein an sich bekannter Transimpedanz-Verstärker eingesetzt werden. Wegen der geringen Intensität der zu detektierenden Wärmestrahlung wird die kleinste noch messbare Temperatur durch ein Rauschen von der Photodiode 8a und dem Verstärker 12a bestimmt. Dieses hängt wiederum von der Temperatur der beiden ab. Um ein pyrometrisches Temperaturmessgerät mit einer besonders niedrigen, minimalen Temperatur zu realisieren, werden bevorzugterweise Photodiode 8a und Verstärker 12a gekühlt.

Grundsätzlich lässt sich die Temperatur eines schwarzen Körpers aufgrund der bei einer gegebenen Wellenlänge gemessenen Intensität seiner Wärmestrahlung mittels der Planck'schen Strahlungsformel bestimmen. Die bevorzugte InGaAs-Photodiode detektiert Licht in einem Wellenlängenbereich, welcher unterhalb von 1.7 µm liegt. Demzufolge genügt es, wenn der pyrometrische Sensor 2a in diesem Wellenlängenbereich schwarz ist. Für die gewünschten Temperaturen von weniger als 200 °C kann die Planck'sche Strahlungsformel durch eine Näherung für kleine Wellenlängen ersetzt werden. In der Auswerteschaltung 10a kann die Temperatur entweder mit Hilfe einer solchen Näherung oder mit Hilfe einer abgespeicherten Eichkurve bestimmt werden. Als Auswerteschaltung 10a kann z.B. eine relativ einfache mikroprozessorgesteuerte Linearisierungsschaltung verwendet werden.

An sich ist die Auswerteschaltung 10a nicht erfindungswesentlich. Wenn das pyrometrische Temperaturmessgerät als Teil einer Schwellwertschaltung verwendet wird, genügt es, die Ausgangsspannung des Verstärkers 5a zu überwachen.

Ein Problem, dem Beachtung geschenkt werden muss, stellen Verluste dar, welche bei der Uebertragung der Wärmestrahlung im Lichtwellenleiter 1a auftreten. Besonders störend, weil nicht vorhersehbar, wirkt in diesem Sinn das Biegen der Glasfaser. Zwei Möglichkeiten, dieses Problem zu lösen, sollen nachfolgend kurz angesprochen werden.

Erstens kann als Lichtwellenleiter 1a eine Glasfaser benützt werden, die an sich schon biegeunempfindlich ist. Besonders gut eignet sich dafür eine PCS-Faser (PCS = plastic-clad silica).

Zweitens kann im Lichtdetektor 3 eine sogenannte interne Referenzbildung vorgenommen werden. Diese kann z.B. mit der nachfolgend erläuterten Anordnung verwirklicht werden.

Fig. 4 zeigt ein Blockschaltbild eines Lichtdetektors 3 mit interner Referenzbildung. An einem Ende des Lichtwellenleiters 1a ist ein wellenlängendiskriminierender Strahlteiler 9 angeordnet. Ein erster Wellenlängenbereich der Wärmestrahlung trifft auf eine erste Photodiode 8b und ein zweiter Wellenlängenbereich auf eine zweite Photodiode 8c. Analog zu dem im Zusammenhang mit Fig. 3 beschriebenen Lichtdetektor 3, wird jeweils ein Photostrom der Photodiode 8b resp. 8c einen Verstärker 12b resp. 12c zugeführt. In einer Auswerteschaltung 10b wird aus einem Verhältnis einer Ausgangsspannung des ersten Verstärkers 12b (entsprechend einer Lichtintensität in einem ersten Wellenlängenbereich) und einer Ausgangsspannung des zweiten Verstärkers 12c (entsprechend einer Lichtintensität in einem zweiten Wellenlängenbereich) eine Temperatur abgeleitet.

Da einerseits ein durch Biegen der Glasfaser bedingter Verlust wellenlängenunabhängig ist, andererseit eine Aenderung der Temperatur zu wellenlängenabhängigen Aenderungen der Intensität der Wärmerstrahlung führt, kann mit dem beschriebenen Lichtdetektor 3 ein biegebedingter (oder ganz allgemein ein wellenlängenunabhängiger) Störeffekt eliminiert werden.

Eine zweite Ausführungsform der Erfindung bezieht sich auf einen in einer Glasfaser integrierten pyrometrischen Sensor.

Fig. 5 zeigt einen Axialschnitt durch einen solchen pyrometrischen Sensor 2a. Als Lichtwellenleiter 1a dient eine von einer lichtundurchlässigen Hülle 7 umgebene Glasfaser, bestehend aus einem Kern 5 und einem Mantel 6. Ein Ende der Glasfaser ragt aus der Hülle 7 heraus. Der Kern 5 der Glasfaser ist an diesem Ende mit einer geeigneten, lokalen Dotierung 11 versehen. Dieser wirkt als pyrometrischer Sensor 2a, indem sie eine Wärmestrahlung in den Lichtwellenleiter 1a einkoppelt.

Die Dotierung 11 kann in einem von der Photodiode 8a detektierbaren Wellenlängenbereich schwarz sein. Wird als Photodiode 8a die bevorzugte InGaAs-Photodiode eingesetzt, so besteht die Dotierung 11 mit Vorteil aus einem Uebergangsmetall.

Das herausragende Ende der Glasfaser kann z.B. auch entmantelt sein und/oder von einer im interessierenden, gegebenen Wellenbereich durchsichtigen Schutzschicht umgeben sein.

Ein drittes Ausführungsbeispiel bezieht sich auf ein pyrometrisches Temperaturmessgerät mit mehreren pyrometrischen Sensoren, welches als sogenannter Hot-Spot-Detektor eingesetzt werden kann. Unter einem Hot-Spot-Detektor ist ein Temperaturmessgerät zu verstehen, welches gleichzeitig von mehreren Messobjekten die Temperatur misst, aber nur die höchste gemessene Temperatur ausgibt.

Fig. 6 zeigt ein solches pyrometrisches Temperaturmessgerät. An einem Lichtdetektor 3 sind als Beispiel drei pyrometrische Sensoren 2b, 2c, 2d angeschlossen. Sie sind in Serie geschaltet, wobei sie mit dem Lichtdetektor 3 mit einem Lichtwellenleiter 1a und untereinander mit zwei weiteren Lichtwellenleitern 1b und 1c verbunden sind. Lichtwellenleiter 1a, 1b, 1c und Lichtdetektor 3 können wie bereits oben beschrieben beschaffen sein. Die pyrometrischen Sensoren 2b, 2c, 2d haben folgenden Aufbau.

Fig. 7 zeigt einen Axialschnitt durch einen solchen pyrometrischen Sensor. Die Lichtwellenleiter 1a, 1b und 1c werden durch eine einzige Glasfaser mit einem Kern 5 und einem Mantel 6 verkörpert. (Auch hier ist die Glasfaser von einer lichtundurchlässigen Hülle 7 umgeben, wie es einer bevorzugten Ausführungsform entspricht.) Die pyrometrischen Sensoren 2b, 2c, 2d sind in diese Glasfaser integriert, indem die Glasfaser an einzelnen Stellen eine lokale Dotierung 11 aufweist.

Im Gegensatz zum zweiten Ausführungsbeispiel (vgl. Fig. 5) darf die Dotierung 11 in einem interessierten, gegebenen Wellenlängenbereich nicht schwarz sein. Eine Wärmestrahlung des pyrometrischen Sensors 2c, welche über den Lichtwellenleiter 1b zum pyrometrischen Sensor 2b gelangt, muss diesen nämlich zumindest teilweise passieren können, um überhaupt über den Lichtwellenleiter 1a zum Lichtdetektor 3 gelangen zu können.

Das Absorptionsvermögen der Dotierung 11 muss also dahingehend optimiert werden, dass es einerseits genügend gross ist, um eine Wärmestrahlung von detektierbarer Intensität erzeugen zu können, dass es andererseits hinreichend klein ist, um durchlaufende Wärmestrahlung nicht zu stark zu dämpfen.

Dass sich für das Absorptionsvermögen ein Optimum finden lässt, geht aus dem folgenden Gedankengang hervor: Die Intensität der Wärmestrahlung eines pyrometrischen Sensors wächst linear mit dem Absorptionsvermögen der Dotierung 11 bei gegebener Temperatur. Sie wächst hingegen (für die Näherung für kleine Wellenlängen) im wesentlichen exponentiell mit der Temperatur bei gegebenen Absorptionsvermögen. D.h., für jedes Absorptionsvermögen kleiner als 100 % lässt sich eine Temperaturdifferenz (zwischen dem zu durchquerenden pyrometrischen Sensor z.B. 2b und dem pyrometrischen Sensor z.B. 2d, dessen Wärmestrahlung zum Lichtdetektor 3 durchgelassen werden soll) finden, bei welchem eine Absorption in der zu durchquerenden Dotierung wettgemacht wird durch die auf eine höhere Temperatur zurückzuführende, höhere Intensität einer durchlaufenden Wärmestrahlung. Die Temperaturdifferenz, welche ein "verdeckter" pyrometrischer Sensor (z.B. 2d) gegenüber den übrigen, "verdeckenden" pyrometrischen Sensoren (z.B. 2b) aufweisen muss, damit seine Wärmestrahlung überhaupt bis zum Lichtdetektor 3 durchdringt, bestimmt die kleinstmögliche, noch auflösbare Temperaturdifferenz des pyrometrischen Temperaturmessgerätes. Es versteht sich, dass diese Temperaturdifferenz wächst mit der Anzahl hintereinander geschalteter pyrometrischer Sensoren.

Eine andere, erfindungsgemässe Anordnung für einen Hot-Spot-Detektor ergibt sich durch eine Erweiterung des ersten Ausführungsbeispiels (vgl. Fig. 1). Dabei werden mehrere Lichtwellenleiter mit Hilfe von Richtkopplern (3 dB Koppler etc.) an einen gemeinsamen Lichtdetektor 3 angeschlossen. Jeder Lichtwellenleiter hat an einem Ende einen pyrometrischen Sensor, welcher in einem gegebenen Wellenlängenbereich die Eigenschaften eines schwarzen Körpers besitzt. Zwar werden dabei Optokoppler und durchschnittlich mehr Lichtwellenleiter als beim dritten Ausführungsbeispiel benötigt, dafür beeinflussen sich die pyrometrischen Sensoren nicht mehr gegenseitig.

Anhand von Messergebnissen, die mit einem erfindungsgemässen pyrometrischen Temperaturmessgerät erhalten worden sind, soll die Leistungsfähigkeit der Erfindung vorgeführt werden.

Das verwendete pyrometrische Temperaturmessgerät entspricht im wesentlichen demjenigen des ersten Ausführungsbeispiels. Als Lichtwellenleiter 1a wurde eine etwa 9 m lange PCS-Faser mit einem Durchmesser des Kerns 5 von etwa 300 µm verwendet. Die Photodiode 8a war eine InGaAs-Photodiode von Fujitsu (FID 13Z32TU, Dunkelstrom 0.5 nA) und der Verstärker 12a ein fA-Operationsverstärker von Burr Brown (OPA 128, 100GOhm Gegenkopplungswiderstand). Eine Mischung von feinverteiltem Kohlenstoff und einem Silikon-Kleber diente als pyrometrischer Sensor 2a.

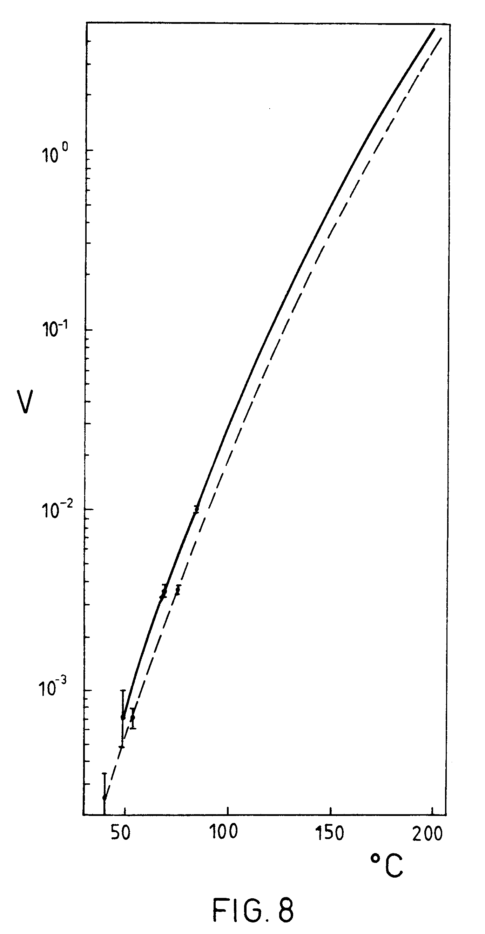

Fig. 8 ist eine Darstellung einer Ausgangsspannung des Verstärkers 10a in Abhängigkeit von der Temperatur des pyrometrischen Sensors 2a. Auf der Abszisse ist eine Temperatur in °C und auf der Ordinate eine Ausgangsspannung in V angegeben. Die durchgezogene Kurve ist die Ausgangsspannung im Fall, dass der Lichtdetektor 3 nicht gekühlt wird (∼ 25 °C). Die minimale, noch detektierbare Temperatur beträgt dann etwa 50 °C. Wenn hingegen der Lichtdetektor auf etwa 0 °C gekühlt wird, dann liegt diese minimale Temperatur bei etwa 40 °C (gestrichelte Kurve).

Die gemessene Temperatur ist mit einer Unsicherheit behaftet, die sich mit der ansteigenden Temperatur exponentiell verringert. Während sie z.B. bei 60 °C noch etwa ± 5 °C beträgt, liegt sie bei 90 °C nur noch bei etwa ± 0.5 °C. Aufgrund solch geringer Unsicherheiten ist dieses pyrometrische Temperaturmessgerät für Temperaturen grösser als 100 °C ausserordentlich gut für Anwendungen in Temperaturschwellwertschaltern geeignet.

Abschliessend kann gesagt werden, dass sich die verschiedenen Merkmale der bevorzugten Ausführungsform weitgehend frei miteinander kombinieren lassen, so dass für die verschiedensten Anwendungen jeweils eine besonders geeignete Ausführungsform der Erfindung konstruieren lässt. Neben den bereits erwähnten Vorteilen, ist zu beachten, dass der pyrometrische Sensor des pyrometrischen Temperaturmessgeräts besonders kostengünstig hergestellt werden kann.

## Patentansprüche

1. Pyrometrisches Niedertemperaturmessgerät, insbesondere für Temperaturen unter 200°C, umfassend
a) mindestens einen Lichtwellenleiter (1a) mit einem Kern (5) und einem Mantel (6),
b) einen Lichtdetektor (3) mit mindestens einer Photodiode (8a),
c) mindestens einen pyrometrischen Sensor (2a), der am Ende des mindestens einen Lichtwellenleiters (1a) angebracht ist und durch eine mindestens einen Querschnitt des Lichtwellenleiters (1a) bedeckende schwarze Schicht (4) gebildet wird,
dadurch gekennzeichnet, dass
d) der mindestens eine Lichtwellenleiter (1a) eine grosse numerische Apertur von mehr als etwa 0.3 besitzt,
e) der mindestens eine Lichtwellenleiter (1a) einen Kern (5) mit einem Durchmesser von mehr als etwa 100µm aufweist und
f) als Lichtwellenleiter (1a) eine PCS (plastic-clad-silica) Faser mit lichtundurchlässiger Hülle (7) verwendet wird.

2. Pyrometrisches Niedertemperaturmessgerät nach Anspruch 1, dadurch gekennzeichnet, dass der Lichtdetektor (3) und insbesondere die Photodiode (8a) gekühlt werden.

3. Pyrometrisches Niedertemperaturmessgerät nach Anspruch 1, dadurch gekennzeichnet, dass zur Bestimmung einer Temperatur im Lichtdetektor (3) durch zwei Photodioden (8b,8c) Lichtintensitäten in zwei verschiedenen Wellenlängenbereichen gemessen werden und eine Temperatur aus einem Verhältnis der beiden Lichtintensitäten abgeleitet wird.

4. Pyrometrisches Niedertemperaturmessgerät nach Anspruch 1,
dadurch gekennzeichnet, dass
a) der pyrometrische Sensor (2a) in der Faser integriert ist,
b) der pyrometrische Sensor (2a) durch eine lokale Dotierung (11) eines Kerns (5) der Glasfaser (1a) gebildet wird, wobei die lichtundurchlässige Hülle (7) lokal entfernt wird.

5. Pyrometrisches Niedertemperaturmessgerät nach Anspruch 4,
dadurch gekennzeichnet, dass
a) der Lichtwellenleiter (1a) mehrere pyrometrische Sensoren (2a) aufweist, die durch lokale Dotierungen (11) eines Kerns (5) der Glasfaser gebildet werden,
b) jede lokale Dotierung (11) nur einen Teil der zu messenden Wärmestrahlung absorbiert.

## Claims

1. Pyrometric low temperature measuring instrument, especially for temperatures below 200°C, comprising
a) at least one optical waveguide (1a) with a core (5) and a cladding (6),
b) a light detector (3) having at least one photodiode (8a),
c) at least one pyrometric sensor (2a) which is located at the end of the at least one optical waveguide (1a) and is formed by a black layer (4) covering at least a cross-section of the optical waveguide (1a),
characterised in that
d) the at least one optical waveguide (1a) has a large numerical aperture of more than approximately 0.3,
e) the at least one optical waveguide (1a) has a core (5) having a diameter of more than approximately 100 µm and
f) a PCS (plastic-clad-silica) fibre having a light-tight cover (7) is employed as optical waveguide (1a).

2. Pyrometric low temperature measuring instrument according to Claim 1, characterised in that the light detector (3) and especially the photodiode (8a) are cooled.

3. Pyrometric low temperature measuring instrument according to Claim 1, characterised in that to determine a temperature light intensities in two different wavelength regions are measured in the light detector (3) by two photodiodes (8b, 8c), and a temperature is derived from a ratio of the two light intensities.

4. Pyrometric low temperature measuring instrument according to Claim 1, characterised in that
a) the pyrometric sensor (2a) is integrated in the fibre,
b) the pyrometric sensor (2a) is formed by a local doping (11) of a core (5) of the glass fibre (1a), the light-tight cover (7) being locally removed.

5. Pyrometric low temperature measuring instrument according to Claim 4, characterised in that
a) the optical waveguide (1a) has a plurality of pyrometric sensors (2a) which are formed by local dopings (11) of a core (5) of the glass fibres,
b) each local doping (11) absorbs only a proportion of the heat radiation to be measured.

## Revendications

1. Appareil de mesure pyrométrique de températures peu élevées, en particulier pour des températures inférieures à 200°C, comprenant :
a) au moins un guide d'ondes lumineuses (1a) avec un coeur (5) et une gaine (6),
b) un détecteur de lumière (3) avec au moins une photodiode (8a),
c) au moins un capteur pyrométrique (2a), qui est installé à l'extrémité d'au moins un guide d'ondes lumineuses (1a) et est formé par une couche noire (4) recouvrant au moins une section transversale du guide d'ondes lumineuses (1a),
caractérisé en ce que :
d) ledit au moins un guide d'ondes lumineuses (1a) possède une grosse ouverture numérique de plus d'environ 0,3,
e) ledit au moins un guide d'ondes lumineuses (1a) comporte un coeur (5) d'un diamètre de plus d'environ 100 micromètres, et
f) on utilise comme guide d'ondes lumineuses (1a) une fibre PCS (plastic-clad silica) avec un recouvrement opaque (7).

2. Appareil de mesure pyrométrique de températures peu élevées selon la revendication 1, caractérisé en ce que le détecteur de lumière (3) et, en particulier, la photodiode (8a), sont refroidis.

3. Appareil de mesure pyrométrique de températures peu élevées selon la revendication 1, caractérisé en ce que, pour déterminer une température dans le détecteur de lumière (3), les intensités lumineuses traversant deux photodiodes (8b, 8c) sont mesurées dans deux domaines de longueurs d'onde différents et la température est déduite d'un rapport des deux intensités lumineuses.

4. Appareil de mesure pyrométrique de températures peu élevées selon la revendication 1, caractérisé en ce que :
a) le capteur pyrométrique (2a) est intégré dans la fibre,
b) le capteur pyrométrique (2a) est formé par un dopage local (11) d'un coeur (5) de la fibre de verre (1a) sur lequel le recouvrement opaque (7) est éliminé localement.

5. Appareil de mesure pyrométrique de températures peu élevées selon la revendication 4, caractérisé en ce que :
a) le guide d'ondes lumineuses (1a) comporte plusieurs capteurs pyrométriques (2a) qui sont formés par des dopages locaux (11) d'un coeur (5) de la fibre de verre,
b) chaque dopage local (11) n'absorbe qu'une partie du rayonnement thermique à mesurer.
